# EUROPEAN PATENT SPECIFICATION

(11) **EP 0 753 737 B1**
(45) Date of publication and mention of the grant of the patent: **12.02.2003**
(21) Application number: 96110688.7
(22) Date of filing: 02.07.1996
(51) Int. Cl.: G01N 27/28, G01N 27/30

(54) **Ion concentration measuring equipment**
Vorrichtung zum Messen der Ionenkonzentration
Dispositif pour mesurer la concentration ionique

(30) Priority: 08.07.1995 JP 19620995
(43) Date of publication of application: 15.01.1997
(73) Proprietor: HORIBA, LTD., Minami-ku Kyoto (JP)
(72) Inventor: Iwamoto, Yasukazu, c/o Horiba, Ltd., Kyoto (JP); Ohkawa, Hiromi, c/o Horiba, Ltd., Kyoto (JP)
(74) Representative: Müller, Frithjof E., Dipl.-Ing.

(56) References cited:
- EP-A- 0 372 121
- EP-A- 0 391 838
- WO-A-92/01218
- DE-A- 3 525 401
- US-A- 4 016 866
- US-A- 4 162 211
- US-A- 4 490 236

## Description

### BACKGROUND OF THE INVENTION

### Field of the Invention

This invention relates to an apparatus for measuring an ion concentration, such as the pH.

### Description of the Prior Art

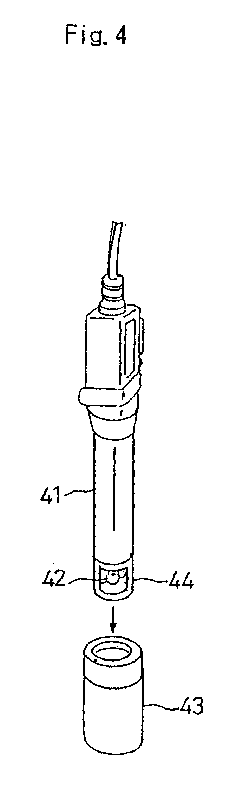

A conventional pH meter for measuring the pH of a solution comprises a main body which forms a measuring portion 42 at the top end of a plastic body 41, as shown in Fig. 4. The measuring portion 42 comprises an ion responding portion with a measurung electrode and a reference electrode liquid junction. This conventional pH meter is constructed to allow a plastic protection cap 43 containing a calibration liquid comprising a proper standard solution inside to be removably attached to its measuring portion 42. In Fig. 4, numeral 44 is a protection ring for protecting the measuring portion 42 when the protection cap 43 is removed.

The conventional pH meter mentioned above has the advantage that attaching the protection cap 43 to the measuring portion 42 not only protects the measuring portion 42, but also automatically calibrates the measuring portion during the storage period, such as a non-measuring period.

However, since in the above-mentioned pH meter the protection cap 43 is constructed separately from the body 41, there is the disadvantage that the cap is easily lost, requiring reliable control to prevent the cap from missing. When the measuring portion 42 is calibrated just before the measurement, to make the reliability doubly sure, the removed protection cap 43 must be attached to the top end of the body 41. Since two hands are needed to remove or attach the protection cap 43 from or to the top end of the body 41, this operation sometimes makes the operation of the conventional pH meter troublesome.

Prior art document EP-A-0 391 838 discloses an ion concentration measuring apparatus comprising a measuring portion holder. The measuring portion holder is provided movably in its axial direction within a cylindrical body and it is equipped with a retraction mechanism. A calibration liquid is contained between the cylindrical body and the measuring portion holder. The measuring portion is protruded to the outside of the body during measurement and housed inside the body immersed in said calibration liquid during a non-measuring period.

### SUMMARY OF THE INVENTION

This invention is accomplished with the above-mentioned matters taken into account, and it is an object of this invention to provide an ion concentration measuring apparatus which can not only reliably protect the measuring portion during a non-measuring period, but also automatically calibrates the measuring portion, while the apparatus can be quickly changed over from the measuring state to the non-measuring state and vice versa with a user-friendly refraction mechanism and enables easy calibration as required during measurement.

This object is solved by an ion concentration measuring apparatus according to the invention which is defined in claim 1. Preferred embodiments are defined in the dependent claims.

According to this invention, the ion concentration measuring apparatus is constructed to have a measuring portion holder which forms a measuring portion comprising an ion responding portion and a reference electrode liquid junction provided movably in its axial direction and travelling back and forth with one touch of a finger by a retraction mechanism within a cylindrical body at the top end, and at the same time a calibration liquid fluid-tightly stored between said body and the measuring portion holder, so that said measuring portion is protruded to the outside of the body during measurement and said measuring portion is housed inside the body during a non-measuring period by actuating a retraction mechanism, thereby immersing the measuring portion in said calibration liquid to enable calibration to take place.

The retraction mechanism is formed by a ball point pen mechanism which holds the measuring portion holder in a first position in which the measuring portion is protruded to the outside of the body or in a second position in which said measuring portion is housed inside the body, and which switches said first position and said second position when said measuring portion holder is moved in its axial direction such that the measuring portion protrudes further out of the body, after which it is automatically moved back by a force of a spring into the respective other position.

In the ion concentration measuring apparatus with the above-mentioned construction, the measuring portion is housed inside the body by retracting the whole measuring portion holder into the inside of the body during a non-measuring period. Consequently, the ion responding portion of the measuring portion is protected and at the same time immersed in the calibration liquid stored in the inside of the body. Thereby the measuring portion is automatically calibrated. In measurement, the manipulation of the retraction mechanism operating portion can protrude the measuring portion to the outside of the body, and the specified ion concentration measurement can be carried out by immersing the measuring portion into the liquid to be inspected as it is. When the measuring portion is calibrated just before the measurement to make the reliability doubly sure, the manipulation of the retraction mechanism operating portion can immerse the measuring portion into the calibration liquid inside the body and the desired calibration can be achieved.

That is, a changeover from measurement to calibration and from calibration to measurement can be carried out with one touch of a finger, and therefore the handling is simple in both measurement and calibration.

### BRIEF DESCRIPTION OF THE DRAWINGS

FIG. 1 is a schematic representation showing an ion concentration measuring apparatus related to a first embodiment according to the invention.

FIG. 2 is a schematic representation illustrating the operation of the said ion concentration measuring apparatus shown in FIG. 1.

FIG. 3 is a schematic representation showing an ion concentration measuring apparatus related to a second embodiment according to the invention.

FIG. 4 is a schematic representation illustrating the conventional technique of ion concentration measuring apparatus.

### DETAILED DESCRIPTION OF THE PREFERRED EMBODIMENTS

Referring now to the drawings, the present invention will be described in detail hereinafter.

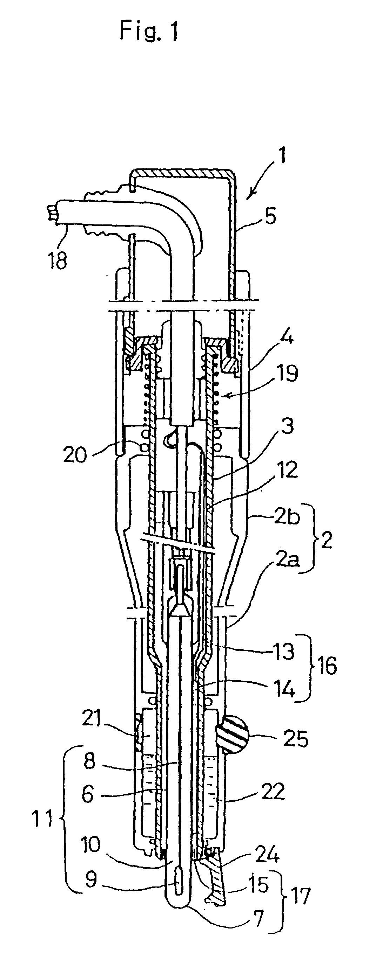

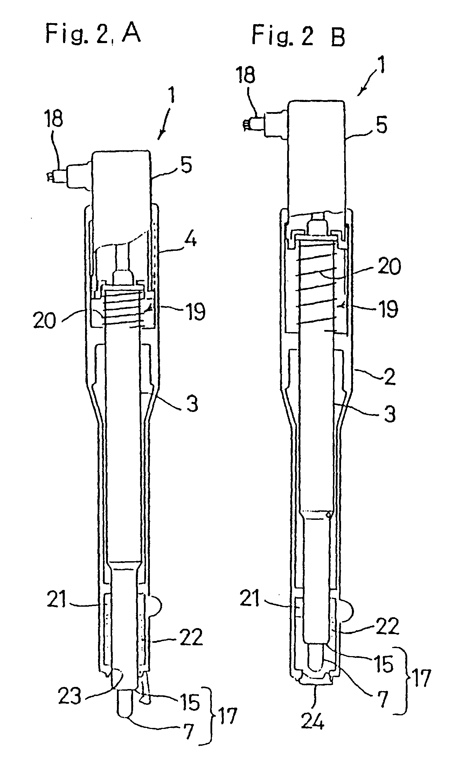

FIG. 1 and FIG. 2 schematically show a pH meter as an ion concentration measuring apparatus related to a first embodiment according to this invention. In FIG. 1, numeral 1 is a pH meter measuring portion which comprises a cylindrical body 2, a measuring portion holder 3 which can move vertically in the axial direction in the inside of said cylindrical body 2, a seal cap 4, and a upper part cap 5.

Said cylindrical body 2 is made of synthetic resin such as hard vinyl chloride and comprises a slightly thinner lower tube 2a and a slightly thicker upper tube 2b.

Said measuring portion holder 3 is constructed as follows. That is, at the shaft centre of the measuring portion holder 3, a measuring electrode inner tube 6 is equipped. The tip end of this measuring electrode inner tube 6 is formed into a pH responding portion 7 comprising a glass responding membrane, inside of which an inner electrode 9 is mounted to the top end of a lead wire 8 for outputting signals and the inner liquid 10 is filled to form the measuring electrode 11.

Between said measuring portion holder 3 and the measuring electrode inner tube 6, a reference electrode Inner electrode 13 is mounted at the tip end of a lead wire 12 and at the same time the gel-form reference electrode inner liquid 14 is filled into the gap inbetween the measuring portion holder 3 and the measuring electrode inner tube 6. Thereby a liquid junction 15 is formed at the tip end of the measuring portion holder 3 to constitute a reference electrode 16.

In this way, on the tip end side of the measuring portion holder 3, a measuring portion 17 comprising a pH responding portion 7 of the measuring electrode 11 and a liquid junction 15 of the reference electrode 16 is formed.

Numeral 18 is a cable for outputting signals which is connected to a signal processing portion not illustrated.

The construction described so far is not at all different from a conventional pH meter, but this invention differs in the following points.

At the upper part of said measuring portion holder 3, a retraction mechanism 19 same as that employed in retractable mechanical pencils or ballpoint pens is installed, and pressing the head of the upper part cap 5 downwards changes the condition (non-measuring condition) in FIG. 2B to the condition shown in FIG. 2A (measurement enable condition), and in addition, pressing the head of the upper part cap 5 downwards in FIG. 2A changes the condition of FIG. 2A to the condition shown in FIG. 2B, and with this configuration, it is designed to allow the measuring portion holder 3 to travel freely back and forth in the axial direction with one touch of a finger. Numeral 20 is a spring.

In the space 21 divided from the inner space of the said reference electrode 16 formed with the measuring portion holder 3 below said body 2, a calibration liquid 22 for calibrating said measuring portion 17 is stored without leakage. That is, at the bottom opening 23 of the body 2, a lid 24 liquid-tightly blocking the bottom opening 23 of the body 2 when the measuring portion holder 3 houses the measuring 17 completely inside the body 2, as shown in FIG. 2B (non-measuring condition), is pivotally mounted to open or close freely.

Said bottom opening 23 is formed to come liquid-tightly in contact with the peripheral surface of the measuring portion holder 3 when the measuring portion holder 3 has its measuring portion 17 protruded outside the body 2 (measurement enable condition), as shown in FIG. 2A.

As calibration liquid 22 a proper pH standard solution can be used. Numeral 25 is a sealing stopper for sealing the injection port of the calibration liquid 22.

In a so constructed pH meter, retracting the whole measuring portion holder 3 into the body, as shown in FIG. 2B, during a non-measuring period stores the measuring portion 17 mounted to the top end of the measuring portion holder 3 in the inside of the body 2. Under this condition, the pH responding portion 7 of the measuring portion 17 is protected and at the same time the pH responding portion 7 is immersed in the calibration liquid 22 stored in the inside of the body 2, enabling automatic calibration of the measuring portion 17.

And in measurement, pressing the upper part cap 5 downwards along the axial direction can protrude the measuring portion 17 outside the body 2 and immersing the intact measuring portion 17 into the liquid to be inspected (not illustrated) enables the specified pH measurement. When calibration is carried out for sure on the measurement portion 17 just before the measurement, manipulating the upper part cap 5 can retract the measuring portion 17 into the inside of the body 2. In this configuration, the measuring portion 17 can be immersed in the calibration liquid 22 to enable the desired calibration.

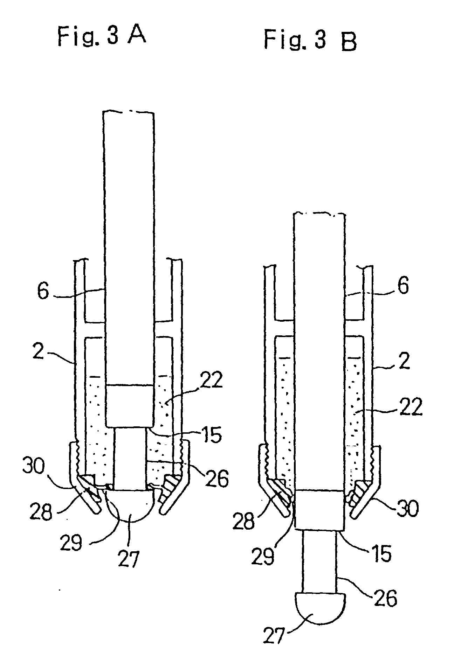

FIG. 3 shows a pH meter related to a second embodiment according to this invention. In this embodiment, the pH responding portion 26 is formed throughout the full circumference of the top end 6A of the measuring electrode inner tube 6. A rubber cap 27 is attached at the tip of the measuring electrode, for example. At the opening of the body 2, a rubber bush 28 for sealing is equipped and a seal portion 29 is designed to come liquidtightly in contact with the said pH responding portion 26. Numeral 30 is a bush retainer.

The operation of the pH meter of this second embodiment is the same as that of the pH meter of the above-mentioned first embodiment, and therefore the explanation is omitted.

This invention should not be limited to the above-mentioned embodiments, but varied in various forms for practicing the invention.

For example, the pH responding portions 7, 26 may be constructed using ISFET other than glass membranes. And it may be employed for ion concentration measuring apparatus other than pH meters such as a calcium ion concentration meter or potassium ion concentration meter. The liquid conjunction 15 of the reference electrode 16 may be constructed in a so-called double junction system.

As described above, according to this invention, the measuring portion can be housed inside the body by retracting the whole measuring portion holder during the non-measuring period and the measuring portion such as ion responding portion can be protected. With the measuring portion housed in the inside of the body, the measuring portion can be immersed in the calibration liquid, and the measuring portion can be automatically calibrated.

In measurement, the measuring portion can be brought extruded outside the body by linearly moving the whole measuring portion holder with a retraction mechanism and the specified ion concentration measurement can be carried out. In this event, if the measuring portion is calibrated for sure use just before measurement, retracting the measuring portion inside the body by the retraction mechanism can immerse the measuring portion in the calibration liquid inside the body and the desired calibration can be carried out.

That is, according to this invention, the measuring portion can be reliably protected and can be automatically calibrated when measurement is not carried out and at the same time the measurement condition can be changed over to and from the non-measurement condition with one touch of a finger and calibration can be carried out easily as required during measurement, and an ion concentration measuring apparatus with superb manoeuvrability can be obtained.

## Claims

1. Ion concentration measuring apparatus comprising a measuring portion holder (3) which forms a measuring portion (17) comprising an ion responding portion (7) and a reference electrode liquid junction (15), wherein:
- said measuring portion holder (3) is provided movably in its axial direction within a cylindrical body (2) and is equipped with a retraction mechanism (19);
- a calibration liquid (22) is contained between said cylindrical body (2) and the measuring portion holder (3); and said retraction mechanism (19) is adapted to protrude said measuring portion (17) to the outside of the body (2) during measurement and to house said measuring portion (17) inside the body (2) immersed in said calibration liquid (22) during a non-measuring period,
**characterized in that**
- said calibration liquid (22) is stored fluid-tightly between said body (2) and the measuring portion holder (3) and
- said retraction mechanism (19) is formed by a ball point pen mechanism which is adapted to hold said measuring portion holder (3) in a first position in which said measuring portion (17) is protruded to the outside of the body (2) or in a second position in which said measuring portion (17) is housed inside the body (2), and which is adapted to switch said first position and said second position when said measuring portion holder (3) is moved in its axial direction such that said measuring portion (17) is protruded further out of said body (2), after which it is automatically moved back by a force of a spring (20) into the respective other position.

2. Ion concentration measuring apparatus according to claim 1, **characterized in that** said measuring portion holder (3) is adapted to move in its axial direction such that said measuring portion (17) is protruded further out of said body (2) when an upper part cap (5) which is provided at an upper end of the measuring portion holder (3), which is not the end where the measuring portion is formed, is pressed down.

3. Ion concentration measuring apparatus according to claim 1 or 2, **characterized in that** said calibration liquid (22) is stored fluid-tightly between said body (2) and the measuring portion holder (3) when said mesuring portion (17) is protruded to the outside of the body and when said measuring portion is housed inside the body (2).

## Patentansprüche

1. Ionenkonzentrations-Messvorrichtung, umfassend einen Messabschnitthalter (3), der einen Messabschnitt (17) bildet, der einen Ionenansprechabschnitt (7) und eine Referenzelektroden-Flüssigkeitsverbindung (15) umfasst, wobei:
- der Messabschnitthalter (3) in seiner axialen Richtung innerhalb eines zylindrischen Körpers (2) beweglich bereitgestellt ist und mit einem Rückzugsmechanismus (19) ausgestattet ist;
- eine Kalibrationsflüssigkeit (22) zwischen dem zylindrischen Körper (2) und dem Messabschnitthalter (3) enthalten ist; und der Rückzugsmechanismus (19) ausgelegt ist, den Messabschnitt (17) zu der Außenseite des Körpers (2) während einer Messung vorzuschieben, und den Messabschnitt (17) innerhalb des Körpers (2) eingetaucht in die Kalibrationsflüssigkeit (22) während einer nicht-messenden Periode unterzubringen,
**dadurch gekennzeichnet, dass**
- die Kalibrationsflüssigkeit (22) fluiddicht zwischen dem Körper (2) und dem Messabschnitthalter (3) gespeichert ist, und
- der Rückzugsmechanismus (19) durch einen Kugelschreibermechanismus gebildet ist, der ausgelegt ist, den Messabschnitthalter (3) in einer ersten Position, in welcher der Messabschnitt (17) zu der Außenseite des Körpers (2) vorgeschoben ist, oder in einer zweiten Position, in welcher der Messabschnitt (17) innerhalb des Körpers (2) untergebracht ist, zu halten, und der ausgelegt ist, in die erste Position und die zweite Position zu schalten, wenn der Messabschnitthalter in seiner axialen Position derart bewegt wird, dass der Messabschnitt (17) weiter aus dem Körper (2) vorgeschoben wird, wonach er automatisch durch eine Kraft einer Feder (20) in die jeweilige andere Position zurückbewegt wird.

2. Ionenkonzentrations-Messvorrichtung nach Anspruch 1, **dadurch gekennzeichnet, dass** sich der Messabschnitthalter (3) ausgelegt ist, sich in seiner axialen Position derart zu bewegen, dass der Messabschnitt (17) weiter aus dem Körper (2) vorgeschoben wird, wenn eine obere Teilkappe (5), die an einem oberen Ende des Messabschnitthalters (3) bereitgestellt ist, das nicht das Ende ist, wo der Messabschnitt gebildet ist, herabgedrückt wird.

3. Ionenkonzentrations-Messvorrichtung nach Anspruch 1 oder 2, **dadurch gekennzeichnet, dass** die Kalibrationsflüssigkeit (22) fluiddicht zwischen dem Körper (2) und dem Messabschnitthalter (3) gespeichert ist, wenn der Messabschnitt (17) zu der Außenseite des Körpers vorgeschoben wird und wenn der Messabschnitt innerhalb des Körpers (2) untergebracht wird.

## Revendications

1. Dispositif pour mesurer la concentration ionique comprenant un support de partie de mesure (3) qui forme une partie de mesure (17) comprenant une partie réagissant aux ions (7) et une jonction liquide d'électrode de référence (15), dans lequel :
- ledit support de partie de mesure (3) est mobile dans sa direction axiale à l'intérieur d'un corps cylindrique (2) et est équipé d'un mécanisme de rétraction (19);
- un liquide d'étalonnage (22) est contenu entre ledit corps cylindrique (2) et le support de partie de mesure (3) ; et ledit mécanisme de rétraction (19) est adapté pour étendre ladite partie de mesure (17) à l'extérieur du corps (2) durant une mesure et pour loger ladite partie de mesure (17) dans le corps (2) plongé dans ledit liquide d'étalonnage (22) durant une période de non-mesure,
**caractérisé en ce que**
- ledit liquide d'étalonnage (22) est stocké d'une façon étanche aux fluides entre ledit corps (2) et ledit support de partie de mesure (3) et
- ledit mécanisme de rétraction (19) est formé par un mécanisme de stylo à bille qui est adapté pour maintenir ledit support de partie de mesure (3) dans une première position dans laquelle ladite partie de mesure (17) s'étend à l'extérieur du corps (2) ou dans une seconde position dans laquelle ladite partie de mesure (17) est logée à l'intérieur du corps (2), et qui est adapté pour basculer de ladite première position à ladite seconde position quand ledit support de partie de mesure (3) est déplacé dans sa direction axiale de telle sorte que ladite partie de mesure (17) s'étende davantage hors dudit corps (2), après quoi il est automatiquement ramené par une force d'un ressort (20) dans l'autre position respective.

2. Dispositif pour mesurer la concentration ionique selon la revendication 1, **caractérisé en ce que** ledit support de partie de mesure (3) est adapté pour se déplacer dans sa direction axiale de telle sorte que ladite partie de mesure (17) s'étende davantage hors dudit corps (2) quand un capuchon de partie supérieure (5) qui est prévu à une extrémité supérieure du support de partie de mesure (3), qui n'est pas l'extrémité où la partie de mesure est formée, est enfoncé.

3. Dispositif pour mesurer la concentration ionique selon les revendications 1 et 2, **caractérisé en ce que** ledit liquide d'étalonnage (22) est stocké d'une façon étanche aux fluides entre ledit corps (2) et le support de partie de mesure (3) quand ladite partie de mesure (17) s'étend à l'extérieur du corps et quand ladite partie de mesure est logée à l'intérieur du corps (2).
